(19)

Europäisches
Patentamt
European
Patent Office
Office européen
des brevets

(11) **EP 4 397 534 A1**

(12) **EUROPEAN PATENT APPLICATION**
published in accordance with Art. 153(4) EPC

(43) Date of publication:
**10.07.2024 Bulletin 2024/28**

(21) Application number: **22866020.5**

(22) Date of filing: **20.01.2022**

(51) International Patent Classification (IPC):
**B60M 3/00** (2006.01)          **B60M 3/06** (2006.01)
**B60M 1/13** (2006.01)

(86) International application number:
**PCT/CN2022/072982**

(87) International publication number:
**WO 2023/035540 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.09.2021 CN 202111046377**

(71) Applicant: **Southwest Jiaotong University Sichuan 610031 (CN)**

(72) Inventors:
• **LI, Qunzhan**
  **Chengdu, Sichuan 610031 (CN)**

• **HUANG, Xiaohong**
  **Chengdu, Sichuan 610031 (CN)**
• **MA, Qingan**
  **Chengdu, Sichuan 611756 (CN)**
• **XIE, Shaofeng**
  **Chengdu, Sichuan 611756 (CN)**
• **WU, Bo**
  **Chengdu, Sichuan 610200 (CN)**

(74) Representative: **SSM Sandmair Patentanwälte Rechtsanwalt Partnerschaft mbB Joseph-Wild-Straße 20 81829 München (DE)**

(54) **DISTRIBUTED-TYPE POWER GENERATION AND POWER SUPPLY SYSTEM FOR TRACTION NETWORK, AND CONTROL METHOD**

(57)      The invention provides a distributed power generation and power supply system for a traction network, and a control method, and relates to the technical field of electrified railway traction power supply. A traction side of an co-phase traction substation is connected with a traction bus; the traction bus is connected with a traction network by means of a feeder line; a power generation apparatus of a railway arranged in a corridor along a railway line accesses, in a distributed manner, a traction power supply system by means of a switching station along the railway line; a central coordinated controller of the co-phase traction substation controls an operating mode of the power generation apparatus, and executes power generation and reactive allocation control. The distributed-type access to a traction power supply system is beneficial to supporting the system network voltage and prolonging the power supply distance, realizing distributed-type access and nearby consuming of new energy, promoting green development of a railway system, and avoiding related electric energy quality problems. The invention is mainly used for management of connecting distributed-type power generation and power supply systems to the traction network.

FIG. 1

## Description

## Cross Reference to Related Applications

This application claims the benefit of Chinese Patent Application 202111046377.7, filed on September 08, 2021, the contents of which are incorporated herein by reference.

## Field of the Invention

The present invention relates to the technical field of alternating current gasification railway traction power supply, and relates to a distributed-type power generation and power supply system for a traction network.

## Background of the Invention

There have been a large number of successful application cases of new energy and renewable energy generation in power system, and the railway system has also been preliminarily studied. New energy and renewable energy power generation is promoted and applied along the railways according to the principles of adapting to local conditions and multi-energy complementation.

The neutral section of the traction power supply system forms a non-electric region, which causes interruption of power supply, and is a bottleneck for restricting the development of electrified railways, and implementing long-distance co-phase power supply can reduce or even eliminate the neutral section to remove the non-electric region. Especially for difficult sections with weak external power sources and limited geographical conditions, such as the Sichuan-Tibet railway, the implementation of long-distance co-phase power supply can cross these difficult sections and solve the problem of traction power supply.

Currently, the proposed solution for new energy and renewable energy to access electrified railways is to concentrate on one place to generate electricity, or generate electricity nearby, or generate electricity at one place far away from traction substation, then a traction bus is connected to the traction substation centrally. The problem solved is the consumption of new energy and renewable energy and the peak elimination and valley filling of traction load, without considering the linear distribution of railway lines and the coexistence of multiple power generation systems. Therefore, how to connect multiple distributed-type new energy and renewable energy power generation systems into the traction power supply system has become a problem worth studying.

When the distributed-type new energy and renewable energy power generation system is connected to the traction network, it will involve complex connection structures and control methods. When there are new energy generation power and traction substation power at the same time, how to control and use the new energy generation power and the traction substation power to meet the needs of new energy consumption nearby, reduce the phenomenon of "wind and light abandonment" and improve the utilization rate of new energy power generation is also an urgent problem to be solved after the new energy power generation system is connected to the grid.

Chinese Patent No.: 202110028103.9 discloses "An co-phase traction power supply and remote power generation grid-connected system and control method", which involves a remote power generation system far away from a traction substation, and the power generation system is connected to the traction substation through power supply lines. When this form is extended to many remote grid-connected power generation systems, it is characterized by a radial structure centered on a traction substation, and all power generation systems need to be connected to the traction substation through their own power supply lines, which is obviously not suitable for the connection of linear distributed power generation along the railway, otherwise the power supply lines will be too long and wasted. Considering that the corridor along the railway has great advantages of installing new energy and renewable energy such as wind and light, the invention utilizes the linear distribution corridor along the railway to generate electricity with new energy and renewable energy such as wind and light, solves the technical problems that distributed and independent power generating devices such as new energy and renewable energy are connected to the traction network and perform power generation control and reactive power control, and is beneficial to the voltage support of the traction network, prolongs the power supply distance through co-phase power supply, improves the utilization of regenerated electric energy of trains, increases the power supply of new energy and renewable energy to the traction load, and reduces the wind and light abandonment phenomenon of new wind and light energy and renewable energy.

## Summary of the Invention

It is an object of the present invention to provide a distributed-type power generation and power supply system for a traction network, and the system can effectively solve the technical problem of direct grid-connected access of distributed-type power generation apparatuses along railways to the traction network to participate in traction power supply and capacity distribution and control.

The object of the present invention is achieved by the following technical solution:

A distributed-type power generation and power supply system for a traction network includes a traction network and an co-phase traction substation TS connected with the traction network, a traction bus TBT of the co-phase traction substation TS is connected with a contact network T line of the traction network by a feeder line FP, a return line FN of the co-phase traction substation TS is connected with a rail R, the traction bus TBT is provided with a voltage transformer PT and the feeder line FP is provided with a current transformer CT, the traction network is provided with a switching station, and the distributed-type power generation and power supply system for the traction network further includes a power generation apparatus arranged along the railway direction, the power generation apparatus accesses the traction network through the switching station; a central coordinated controller CCC is provided at the co-phase traction substation TS, a measurement-control terminal of the central coordinated controller CCC is connected with a measurement-control terminal of the power generation apparatus via an optical fiber pair, a measurement terminal of the voltage transformer PT and a measurement terminal of the current transformer CT are connected with an input terminal of the central coordinated controller CCC.

The number of the switching stations is n, and specifically, the switching stations are denoted as a switching station ST1, a switching station ST2,..., a switching station STi,..., a switching station STn, wherein $n \geq 1$, $i = 1, 2, 3,..., n$; a sectionalizer SEi is connected in series with the contact network T line at an exit of the switching station STi to section the contact network T line; two sides of the sectionalizer SEi are connected with a sectionalized bus BSi via a connecting line L1i, and a connecting line L2i, respectively; the voltage of the sectionalized bus BSi of the switching station STi provides a support voltage for the power generation apparatus.

The number of the power generation apparatuses is n, and specifically, the power generation apparatuses are denoted as a power generation apparatus SG1, a power generation apparatus SG2,..., a power generation apparatus SGi,..., a power generation apparatus SGn, wherein $n \geq 1$, $i = 1, 2, 3,..., n$; the power generation apparatus SGi is connected with the sectionalized bus BSi of the switching state STi by a connection SPi; the sectionalized bus BSi is provided with a voltage transformer PTi; the measurement-control terminal of the central coordinated controller CCC is connected with the measurement-control terminals of the power generation apparatus SG1, the power generation apparatus SG2, the power generation apparatus SGi..., the power generation apparatus SGn via the optical fiber pair sS1, the optical fiber pair sS2,..., the optical fiber pair sSi,..., and the optical fiber pair sSn, respectively, measurement terminals of the voltage transformer PT1, the voltage transformer PT2,..., the voltage transformer PTi,..., the voltage transformer PTn are connected with the input terminal of the central coordinated controller CCC via an optical fiber s1, an optical fiber s2, an optical fiber si,..., and an optical fiber sn, respectively.

The power generation apparatus SGi comprises a matching transformer MTi, an AC-DC conversion apparatus GCi and a new energy generation apparatus GNEi; the number of the new energy generation apparatuses GNEi is h, $h \geq 1$, and specifically, the new energy generation apparatus are denoted as a new energy generation apparatus GNEi1, a new energy generation apparatus GNEi2,..., a new energy generation apparatus GNEih; DC sides of the new energy generation apparatus GNEi1, the new energy generation apparatus GNEi2,..., the new energy generation apparatus GNEih are connected in parallel with a DC bus DCBi, and then are connected with a DC port of the AC-DC conversion apparatus GCi; a secondary winding of the matching transformer MTi is connected with an AC port of the AC-DC conversion apparatus GCi, and one end of a primary winding of the matching transformer MTi is connected with the connection SPi and the other end is connected with the rail R, wherein the measurement-control terminal of the central coordinated controller CCC is connected with the measurement-control terminal of the AC-DC conversion apparatus GCi and the measurement-control terminals of the h new energy generation apparatuses GNEi via the optical fiber pair sSi.

The AC-DC conversion apparatus GCi, when used alone, is present as a reactive generator.

Installed capacities of the power generation apparatus SG1, the power generation apparatus SG2,..., the power generation apparatus SGi,..., the power generation apparatus SGn correspond to S1, S2,..., Si,..., Sn, respectively, maximum active power generation capacities correspond to E1, E2,..., Ei,..., En, respectively, and maximum reactive compensation capacities correspond to Q1, Q2,..., Qi,..., Qn, respectively, and

$$Si = \sqrt{E_i^2 + Q_i^2}$$ is satisfied.

The new energy generation apparatus GNEi is one or several of a photovoltaic power generation apparatus, a photothermal power generation apparatus, a hydrogen power generation apparatus, a wind power generation apparatus, or a biochemical energy power generation apparatus.

Another object of the present invention is to provide a control method of a distributed-type power generation and power supply system for a traction network, which effectively solves the technical problem of controlling the grid-connection of a distributed-type new energy power generation apparatus with the traction network and supporting the voltage of the traction network.

Another object of the present invention is achieved by the following technical solution:

a control method of a distributed-type power generation and power supply system for a traction network, the method including:

calculating, by a central coordinated controller CCC, a total installed capacity S of power generation apparatuses based on installed capacities S1, S2,..., Si,..., Sn of the power generation apparatus SG1, the power generation apparatus SG2,..., the power generation apparatus SGi,..., the power generation apparatus SGn which access the traction network by a switching station arranged in the traction network, wherein, $S = \sum_{i=1}^{n} Si$; measuring, by the central coordinated controller CCC, the instantaneous total power of the traction network comprising n power generation apparatuses through a voltage transformer PT and a current transformer CT, and distinguishing a power consumption state and a power generation state; determining, by the central coordinated controller CCC, the total active power generation capacity E of the n power generation apparatuses based on the instantaneous total power of the traction network comprising the n power generation apparatuses and the total installed capacity S of the power generation apparatuses, wherein E ≤ S; and controlling the active power generation capacity of the power generation apparatus SGi to be Ei, wherein Ei = E * Si/S.

Acquiring, by the central coordinated controller CCC, a voltage UPi of the switching station STi through a voltage transformer PTi; and controlling the power generating apparatus SGi to emit a reactive compensation capacity qi to compensate for a power factor of the traction network and the network voltage of the switching station based on the voltage UPi, wherein the absolute value of qi satisfies |qi|≤ Qi.

Judging, by the central coordinated controller CCC, whether the power generation apparatus has a failure or has no power generation condition, when the power generation apparatus has a failure or does not have a power generation condition, causing the power generation apparatus to exit operation, wherein p power generation apparatuses among the power generation apparatus SG1, the power generation apparatus SG2,..., the power generation apparatus SGi,..., the power generation apparatus SGn fail or do not have a power generation condition, which are collectively referred to as a failed power generation apparatus SGk1, a failed power generation apparatus SGk2,..., a failed power generation apparatus SGkz,..., a failed power generation apparatus SGkp (kzE f 1, 2, 3,..., n}); z = 1, 2, 3,..., p; i = 1, 2, 3,..., n; i ≠ kz; 1 ≤p ≤ n; calculating the total installed capacity Sa of the power generation apparatuses not exiting operation, $Sa = \sum_{i=1, i \neq kz}^{n} Si$; measuring, by the central coordinated controller CCC, the instantaneous total power of the traction network with n-p power generation apparatuses through the voltage transformer PT and the current transformer CT, and distinguishing a power consumption state and a power generation state; determining the total active power generation capacity Ea of the power generation apparatuses that do not exit operation based on the instantaneous total power of the traction network comprising n-p power generation apparatuses and the total installed capacity Sa of the power generation apparatuses, wherein Ea ≤ Sa; and controlling the active power generation capacity of the power generation apparatus SGi to be Eai, wherein Eai = Ea * Si/Sa; and when a power generation apparatus fails or does not have a power generation condition, then: reacquiring, by the central coordinated controller CCC, the voltage UPai of the switching station STi corresponding to the power generation apparatus SGi that has not exited operation through the voltage transformer PTi; controlling the power generation apparatus SGi to generate a reactive compensation capacity qai based on the voltage UPai to compensate for the power factor of the traction network and the network voltage of the switching station at this time, wherein the absolute value of qai satisfies |qai| ≤ Qi, and the power generation apparatus SGi is capable of controlling either the active power generation capacity or the reactive compensation capacity , respectively, or controlling both the active power generation capacity and the reactive compensation capacity simultaneously.

The specific conditions for distinguishing the power consumption state and the power generation state are: the instantaneous total power of the traction network is greater than 0, which is recorded as the power consumption state; when the sum of the energy generated by all the new energy generation apparatuses of the traction network and the regenerative energy of the train is greater than the sum of the traction energy of the train, the instantaneous total power of the traction network is less than 0, which is recorded as the power generation state.

The working principle of the invention is that according to the distributed characteristics of new energy and renewable energy in the corridor along the railway line, a plurality of power generation apparatuses are accessed into the traction network in a distributed manner by using the switching station arranged along the traction network, and the active and reactive power output of the power generation apparatuses are distributed and controlled by detecting the superimposed power of the power generation apparatuses and electric locomotives, so as to realize the direct power supply of the new energy and renewable energy to the traction load, support the traction network voltage in real time, prolong the power supply distance, and improve the utilization rate of regenerated electric energy of trains and the utilization rate of power generation of new energy and renewable energy.

Compared with the prior art, the beneficial effects of the present invention are:

First, new energy and renewable energy can be connected to the traction network in a distributed manner, which is conducive to the direct integration of new energy and renewable energy along the railway into the traction network to participate in traction power supply, without connecting the new energy and renewable energy power generation system to the traction substation through their respective power supply lines;

Second, it is conducive to supporting the traction network voltage along the railway line in real time and providing good power supply conditions for train traffic; and

Third, it is conducive to extending the power supply distance, improving the utilization rate of new energy and renewable energy while improving the utilization rate of renewable energy, and reducing the phenomenon of "wind and light abandonment".

**Brief Description of Drawings**

FIG. 1 is a schematic structural diagram of the present invention.

FIG. 2 is a schematic structural diagram of the power generation apparatus of the present invention.

FIG. 3 is a flowchart of the control method of the present invention.

**Detailed Description of the Embodiments**

In order for those skilled in the art to better understand the technical solutions of the present invention, the present invention is further described below with reference to the accompanying drawings and the detailed embodiments.

Embodiment 1

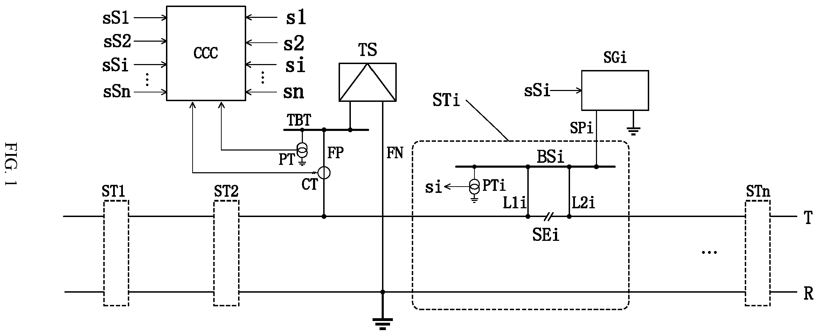

As shown in FIG. 1, the present embodiment provides a distributed-type power generation and power supply system for a traction network, including a traction network and an co-phase traction substation TS connected with the traction network, the traction network is erected above the running rail of the railway, a traction bus TBT of the co-phase traction substation TS is connected with a contact network T line of the traction network by a feeder line FP, a return line FN of the co-phase traction substation TS is connected with a rail R, the traction bus TBT is provided with a voltage transformer PT and the feeder line FP is provided with a current transformer CT, the traction network is provided with a switching station, and the distributed-type power generation and power supply system for the traction network further includes a power generation apparatus arranged in a corridor along the railway line, the power generation apparatus accesses the traction network through the switching station in a distributed manner.

A central coordinated controller CCC is provided at the co-phase traction substation TS, a measurement-control terminal of the central coordinated controller CCC is connected with a measurement-control terminal of the power generation apparatus via an optical fiber pair, a measurement terminal of the voltage transformer PT and a measurement terminal of the current transformer CT are connected with an input terminal of the central coordinated controller CCC.

In the embodiment, the co-phase traction substation can cancel the neutral section at the outlet of the substation to realize the co-phase power supply (the specific solution of the co-phase traction substation can refer to the patent application documents or non-patent documents related to the co-phase power supply). Since the power supply distance of the traction network will be increased after the neutral section is cancelled, in order to increase the power supply reliability, the embodiment is provided with a switching station, and the new energy power generation system in the embodiment accesses the traction network through the switching station in a distributed manner. On the one hand, nearby consumption is realized to promote the green development of the railway system, on the other hand, it can avoid the line loss problem caused by long-distance transmission to the substation in the solution of centralized access to the traction network through the substation, thus improving the utilization efficiency of new energy.

Preferably, the number of the switching stations is n, and specifically, the switching stations are denoted as a switching station ST1, a switching station ST2,..., a switching station STi,..., a switching station STn; a sectionalizer SEi is connected in series with the contact network T line at an exit of the switching station STi to section the contact network T line and make the train pass through without power; two sides of the sectionalizer SEi are connected with a sectionalized bus BSi via a connecting line L1i, and a connecting line L2i, respectively, wherein n ≥ 1, i = 1, 2, 3,..., n; the voltage of the sectionalized bus BSi of the switching station provides a support voltage for the power generation apparatus.

In the embodiment, the switching station is arranged on the line to ensure the reliability and flexibility of power supply and reduce the power failure range. Under normal operation, the switch of the switching station is in a connected state, and only under working conditions such as fault or maintenance, the switch of the switching station is in a disconnected state. The switching station is different from a section post provided with the neutral section. The section post is a facility that divides the traction network into different power supply sub-sections. Usually, the section post is set at the power supply boundary between two adjacent traction substations. When a traction substation loses power due to fault, the switch of the section post can be closed for cross-zone power supply. Under normal operation, the switch of the section post is in a disconnected state. In addition, in the double-track section, parallel operation at the ends of the uplink and downlink lines can be implemented in the section post.

Preferably, the number of the power generation apparatuses is n, n ≥ 1, i = 1, 2, 3,..., n, and specifically, the power generation apparatuses are denoted as a power generation apparatus SG1, a power generation apparatus SG2,..., a power generation apparatus SGi,..., a power generation apparatus SGn; the power generation apparatus SGi is connected with the sectionalized bus BSi of the switching state STi by a connection SPi; the sectionalized bus BSi is provided with a voltage transformer PTi; the measurement-control terminal of the central coordinated controller CCC is connected with the measurement-control terminals of the power generation apparatus SG1, the power generation apparatus SG2, the power generation apparatus SGi..., the power generation apparatus SGn via the optical fiber pair sS1, the optical fiber pair sS2,..., the optical fiber pair sSi,..., and the optical fiber pair sSn, respectively, measurement terminals of the voltage transformer PT1, the voltage transformer PT2,..., the voltage transformer PTi,..., the voltage transformer PTn are connected with the input terminal of the central coordinated controller CCC via an optical fiber s1, an optical fiber s2, an optical fiber si,..., and an optical fiber sn, respectively.

In implementing this embodiment, the power generation apparatus accesses the switching station nearby, so as to avoid the energy loss and implementation difficulties caused by the lead-in line being too long.

Preferably, installed capacities of the power generation apparatus SG1, the power generation apparatus SG2,..., the power generation apparatus SGi,..., the power generation apparatus SGn correspond to S1, S2,..., Si,..., Sn, respectively, maximum active power generation capacities correspond to E1, E2,..., Ei,..., En, respectively, and maximum reactive compensation capacities correspond to Q1, Q2,..., Qi,..., Qn, respectively, and $Si = \sqrt{E_i^2 + Q_i^2}$ is satisfied.

Preferably, in the double-track railway, the uplink and downlink contact networks are connected in parallel through the sectionalized bus of the switching station. In this example, the uplink and downlink traction networks are all connected in parallel, and the voltage loss and electric energy loss of the traction network are minimal, which is beneficial to improving the voltage level of the power grid. The switching station provides guarantee for reliable power supply and sectional protection of the traction network.

When implementing this embodiment, the power supply distance is extended through the co-phase traction substation TS, and the utilization of renewable electric energy of trains is improved. At the same time, the power supply of new energy and renewable energy to traction load is increased, the utilization rate of new energy and renewable energy is improved, and the phenomenon of wind and light abandonment by new energy and renewable energy is reduced. It should also be noted that the setting of the co-phase traction substation TS is reasonably selected according to the external power supply. If the short-circuit capacity of the external power supply is large, the power quality requirements can be met by adopting the single-phase and co-phase power supply. If the short-circuit capacity of the external power supply is small and the single-phase and co-phase power supply cannot meet the requirements of power quality, the combined co-phase power supply can be adopted to compensate the power quality within the national standard. Single and single-phase combined co-phase power supply is recommended, and single and three-phase combined co-phase power supply can be considered when existing conditions are used.

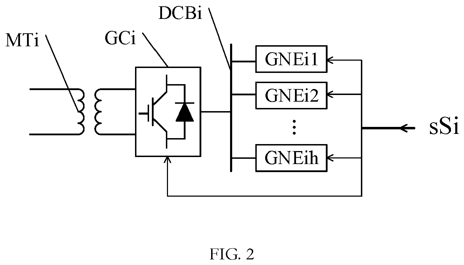

As shown in FIG. 2, which is the power generation apparatus of the distributed-type power generation and power supply system for the traction network, the power generation apparatus SGi includes a matching transformer MTi, an AC-DC conversion apparatus GCi and a new energy generation apparatus GNEi; the number of the new energy generation apparatuses GNEi is h, h ≥ 1, and specifically, the new energy generation apparatus are denoted as a new energy generation apparatus GNEi1, a new energy generation apparatus GNEi2,..., a new energy generation apparatus GNEih; DC sides of the new energy generation apparatus GNEi1, the new energy generation apparatus GNEi2,..., the new energy generation apparatus GNEih are connected in parallel with a DC bus DCBi, and then are connected with a DC port of the AC-DC conversion apparatus GCi; a secondary winding of the matching transformer MTi is connected with an AC port of the AC-DC conversion apparatus GCi, and one end of a primary winding of the matching transformer MTi is connected with the connection SPi and the other end is connected with the rail R (earth wire), n ≥ 1, i = 1, 2, 3,..., n, wherein the measurement-control terminal of the central coordinated controller CCC is connected with the measurement-control terminal of the AC-DC conversion apparatus GCi and the measurement-control terminals of the h new energy generation apparatuses GNEi via the fiber pair sSi. Preferably, the AC-DC conversion apparatus GCi, when used alone, is present as a reactive generator.

Preferably, the new energy generation apparatus GNEi is one or several of a photovoltaic power generation apparatus, a photothermal power generation apparatus, a hydrogen power generation apparatus, a wind power generation apparatus, or a biochemical energy power generation apparatus.

When this embodiment is implemented, an energy storage apparatus can be selectively set according to the different requirements of the power department for the traction power supply system. The energy storage apparatus can be one or several of hydrogen production energy storage by electrolysis of water, super capacitor energy storage, flywheel energy storage, flow battery energy storage and lithium battery energy storage. If the power department allows the surplus power of the traction power supply system to be connected to the grid, the energy storage apparatus may not be set. If the power department restricts the surplus power of the traction power supply system to be connected to the grid, an energy storage apparatus shall be set on the traction bus TBT of the co-phase traction substation TS. Setting up the energy storage apparatus is not only beneficial to improving the utilization rate of new energy and renewable energy, but also can cut peaks and fill valleys of traction load and reduce basic electricity charges.

Embodiment 2

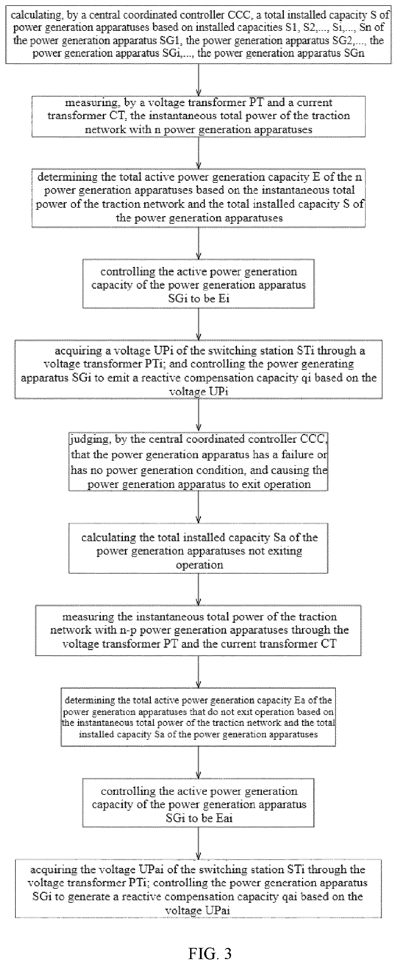

As shown in FIG. 3, the embodiment provides a control method of the distributed-type power generation and power supply system for the traction network based on Embodiment 1, which is applied to a central coordinated controller CCC, and is implemented by the following technical solution:
The distributed-type power generation and power supply system for the traction network includes n power generation apparatuses, and specifically, the power generation apparatuses are denoted as a power generation apparatus SG1, a power generation apparatus SG2,..., a power generation apparatus SGi,..., a power generation apparatus SGn, and the method includes:

calculating, by a central coordinated controller CCC, a total installed capacity S of power generation apparatuses based on installed capacities S1, S2,..., Si,..., Sn of the power generation apparatus SG1, the power generation apparatus SG2,..., the power generation apparatus SGi,..., the power generation apparatus SGn which access the traction network by a switching station arranged in the traction network, wherein, $S = \sum_{i=1}^{n} Si$;

measuring, by the central coordinated controller CCC measures, the instantaneous total power of the traction network with n power generation apparatuses through a voltage transformer PT and a current transformer CT, and distinguishes a power consumption state and a power generation state;

wherein there are three operating conditions that traction, regeneration and idle running in trains running on the line. Traction is equivalent to electricity consumption, regeneration is equivalent to electricity generation, and regeneration trains can provide electricity for traction trains. When the sum of the generated energy of all new energy power generation apparatuses in the traction network and the regenerated energy of the train is less than the sum of the traction energy of the train, the instantaneous total power of the traction network measured by the voltage transformer PT and the current transformer CT is greater than 0, which is recorded as the power consumption state. When the sum of the generated energy of all new energy power generation apparatuses in the traction network and the regenerated energy of the train is greater than the sum of the traction energy of the train, the instantaneous total power of the traction network is less than 0, which is recorded as the power generation state. The power generation state can be generated by regeneration trains or by new energy power generation apparatuses.

determining the total active power generation capacity E of the n power generation apparatuses based on the instantaneous total power of the traction network including the n power generation apparatuses and the total installed capacity S of the power generation apparatuses, wherein E ≤ S; and
controlling, by the central coordinated controller CCC, the active power generation capacity of the power generation apparatus SGi to be Ei, wherein Ei = E * Si/S.

Preferably, the voltage UPi of the switching station STi is acquired by the voltage transformer PTi; and the power generating apparatus SGi is controlled to emit a reactive compensation capacity qi, whose absolute value satisfies |qi| ≤ Qi, based on the voltage UPi to compensate for the power factor of the traction network and the network voltage of the switching station.

It should be noted that the total active power generation capacity E can be adjusted according to the different requirements of the power department for the traction power supply system. If the power department allows the surplus power of the traction power supply system to be connected to the grid, the total active power generation capacity E is increased, and the power generation apparatus is controlled to generate electricity according to the maximum power. If the power department restricts the surplus power of the traction power supply system to be connected to the grid, the total active power generation capacity E is adjusted to control the power generation (regeneration) of the instantaneous total power of the traction network within the allowable range of the power department. In addition, the control of the reactive compensation capacity qi is globally optimized according to the voltage UPi, and the power generation apparatus is controlled to emit the global reactive compensation capacity qi which meets the requirements of the voltage UPi.

Preferably, the central coordinated controller CCC judges whether the power generation apparatus has a failure or has no power generation condition, when the power generation apparatus has a failure or does not have a power generation condition,

the power generation apparatus exits operation, wherein p power generation apparatuses among the power generation apparatus SG1, the power generation apparatus SG2,..., the power generation apparatus SGi,..., the power generation apparatus SGn fail or do not have a power generation condition, which are referred to as a failed power generation apparatus SGk1, a failed power generation apparatus SGk2,..., a failed power generation apparatus SGKz,..., a failed power generation apparatus SGkp (kz ∈ f 1, 2, 3,..., n}); z = 1, 2, 3,..., p; i = 1, 2, 3,..., n; i ≠ kz; 1 ≤ p ≤ n;

the central coordinated controller CCC calculates the total installed capacity Sa of the power generation apparatuses not exiting operation,

$$Sa = \sum_{i=1, i \neq kz}^{n} Si$$

the central coordinated controller CCC measures the instantaneous total power of the traction network comprising n-p power generation apparatuses through the voltage transformers PT and the current transformers CT, and distinguishes a power consumption state and a power generation state;

the central coordinated controller CCC determines the total active power generation capacity Ea of the power generation apparatuses that do not exit operation based on the instantaneous total power of the traction network comprising n-p power generation apparatuses and the total installed capacity Sa of the power generation apparatuses, Ea ≤Sa; and the central coordinated controller CCC controls the active power generation capacity from the power generation apparatus SGi to be Eai, Eai = Ea * Si/Sa.

Preferably, when a power generation apparatus fails or does not have a power generation condition, then: the voltage UPai of the switching station STi corresponding to the power generation apparatus SGi that has not exited operation is reacquired through the voltage transformer PTi; and

the central coordinated controller CCC controls the power generation apparatus SGi to emit a reactive compensation capacity qai based on the voltage UPai to compensate for the power factor of the traction network and the grid voltage of the switching station, wherein the absolute value of qai satisfies |qai| ≤ Qi.

It should be noted that the total active power generation capacity Ea can be adjusted according to the different requirements of the power department for the traction power supply system. If the power department allows the surplus power of the traction power supply system to be connected to the grid, the total active power generation capacity Ea is increased, and the power generation apparatus with the power generation condition is controlled to generate electricity according to the maximum power. If the power department restricts the surplus power of the traction power supply system to be connected to the grid, the total active power generation capacity Ea is adjusted to control the power generation (regeneration) of the instantaneous total power of the traction network within the allowable range of the power department. In addition, the control of the reactive compensation capacity qai is globally optimized according to the voltage UPai, and the power generation apparatus with the power generation condition is controlled to emit the global reactive compensation capacity qai meeting the requirements of the voltage UPai.

Preferably, the power generation device SGi is capable of controlling the active power generation capacity or the reactive power compensation capacity separately or controlling the active power generation capacity and the reactive power compensation capacity simultaneously.

The above are only preferred embodiments of the present invention, and it should be noted that the above preferred embodiments should not be regarded as limiting the present invention, and the scope of protection of the present invention should be subject to the scope defined by the claims. For those skilled in the art, several improvements and modifications can be made without departing from the spirit and scope of the present invention, which should also be regarded as the scope of protection of the present invention.

**Claims**

1. A distributed-type power generation and power supply system for a traction network, comprising a traction network and an co-phase traction substation TS connected with the traction network, a traction bus TBT of the co-phase traction substation TS being connected with a contact network T line of the traction network by a feeder line FP, a return line FN of the co-phase traction substation TS being connected with a rail R, the traction bus TBT being provided with a voltage transformer PT and the feeder line FP being provided with a current transformer CT, **characterized in that**: the traction network is provided with a switching station, and the distributed-type power generation and power supply system for the traction network further comprises a power generation apparatus arranged along the railway direction, the power generation apparatus accesses the traction network through the switching station; a central coordinated controller CCC is provided at the co-phase traction substation TS, a measurement-control terminal of the central coordinated controller CCC is connected with a measurement-control terminal of the power generation apparatus via an optical fiber pair, a measurement terminal of the voltage transformer PT and a measurement terminal of the current transformer CT are connected with an input terminal of the central coordinated controller CCC.

2. The distributed-type power generation and power supply system for a traction network according to claim 1, **characterized in that** the number of the switching stations is n, and specifically, the switching stations are denoted as a switching station ST1, a switching station ST2,..., a switching station STi,..., a switching station STn, wherein n ≥ 1, i = 1, 2, 3,..., n; a sectionalizer SEi is connected in series with the contact network T line at an exit of the switching station STi to section the contact network T line; two sides of the sectionalizer SEi are connected with a sectionalized bus BSi via a connecting line L1i, and a connecting line L2i, respectively; the voltage of the sectionalized bus BSi of the switching station STi provides a support voltage for the power generation apparatus.

3. The distributed-type power generation and power supply system for a traction network according to claim 2, **characterized in that** the number of the power generation apparatuses is n, and specifically, the power generation apparatuses are denoted as a power generation apparatus SG1, a power generation apparatus SG2,..., a power generation apparatus SGi,..., a power generation apparatus SGn, wherein n ≥ 1, i = 1, 2, 3,..., n; the power generation apparatus SGi is connected with the sectionalized bus BSi of the switching state STi by a connection SPi; the sectionalized bus BSi is provided with a voltage transformer PTi; the measurement-control terminal of the central coordinated controller CCC is connected with the measurement-control terminals of the power generation apparatus SG1, the power generation apparatus SG2, the power generation apparatus SGi..., the power generation apparatus SGn via the optical fiber pair sS1, the optical fiber pair sS2,..., the optical fiber pair sSi,..., and the optical fiber pair sSn, respectively, measurement terminals of the voltage transformer PT1, the voltage transformer PT2,..., the voltage transformer PTi,..., the voltage transformer PTn are connected with the input terminal of the central coordinated controller CCC via an optical fiber s1, an optical fiber s2, an optical fiber si,..., and an optical fiber sn, respectively.

4. The distributed-type power generation and power supply system for a traction network according to claim 3, **characterized in that** the power generation apparatus SGi comprises a matching transformer MTi, an AC-DC conversion apparatus GCi and a new energy generation apparatus GNEi; the number of the new energy generation apparatuses GNEi is h, h ≥ 1, and specifically, the new energy generation apparatus are denoted as a new energy generation apparatus GNEi1, a new energy generation apparatus GNEi2,..., a new energy generation apparatus GNEih; DC sides of the new energy generation apparatus GNEi1, the new energy generation apparatus GNEi2,..., the new energy generation apparatus GNEih are connected in parallel with a DC bus DCBi, and then are connected with a DC port of the AC-DC conversion apparatus GCi; a secondary winding of the matching transformer MTi is connected with an AC port of the AC-DC conversion apparatus GCi, and one end of a primary winding of the matching transformer MTi is connected with the connection SPi and the other end is connected with the rail R, wherein the measurement-control terminal of the central coordinated controller CCC is connected with the measurement-control terminal of the AC-DC conversion apparatus GCi and the measurement-control terminals of the h new energy generation apparatuses GNEi via the optical fiber pair sSi.

5. The distributed-type power generation and power supply system for a traction network according to claim 4, **characterized in that** the AC-DC conversion apparatus GCi, when used alone, is present as a reactive generator.

6. The distributed-type power generation and power supply system for a traction network according to claim 3, **characterized in that** installed capacities of the power generation apparatus SG1, the power generation apparatus SG2,..., the power generation apparatus SGi,..., the power generation apparatus SGn correspond to S1, S2,..., Si,..., Sn, respectively, maximum active power generation capacities correspond to E1, E2,..., Ei,..., En, respectively, and maximum reactive compensation capacities correspond to Q1, Q2,..., Qi,..., Qn, respectively, and $Si = \sqrt{E_i^2 + Q_i^2}$ is satisfied.

7. The distributed-type power generation and power supply system for a traction network according to claim 4, **characterized in that** the new energy generation apparatus GNEi is one or several of a photovoltaic power generation apparatus, a photothermal power generation apparatus, a hydrogen power generation apparatus, a wind power generation apparatus, or a biochemical energy power generation apparatus.

8. A control method of a distributed-type power generation and power supply system for a traction network, **characterized by** comprising: calculating, by a central coordinated controller CCC, a total installed capacity S of power generation apparatuses based on installed capacities S1, S2,..., Si,..., Sn of the power generation apparatus SG1, the power generation apparatus SG2,..., the power generation apparatus SGi,..., the power generation apparatus SGn which access the traction network by a switching station arranged in the traction network, wherein,

$$S = \sum_{i=1}^{n} Si$$

measuring, by the central coordinated controller CCC, the instantaneous total power of the traction network comprising n power generation apparatuses through a voltage transformer PT and a current transformer CT, and distinguishing a power consumption state and a power generation state;
determining, by the central coordinated controller CCC, the total active power generation capacity E of the n power generation apparatuses based on the instantaneous total power of the traction network comprising the n power generation apparatuses and the total installed capacity S of the power generation apparatuses, wherein E≤ S; and
controlling, by the central coordinated controller CCC, the active power generation capacity of the power generation apparatus SGi to be Ei, wherein Ei = E * Si/S.

9. The control method of a distributed-type power generation and power supply system for a traction network according to claim 8, **characterized by** further comprising:

   acquiring, by the central coordinated controller CCC, a voltage UPi of the switching station STi through a voltage transformer PTi; and controlling the power generating apparatus SGi to emit a reactive compensation capacity qi to compensate for a power factor of the traction network and the network voltage of the switching station based on the voltage UPi, wherein the absolute value of qi satisfies $|qi| \leq Qi$.

10. The control method of a distributed-type power generation and power supply system for a traction network according to claim 8, **characterized by** further comprising:

   judging, by the central coordinated controller CCC, whether the power generation apparatus has a failure or has no power generation condition, when the power generation apparatus has a failure or does not have a power generation condition, causing the power generation apparatus to exit operation, calculating the total installed capacity Sa of the power generation apparatuses not exiting operation, $Sa = \sum_{i=1, i \neq kz}^{n} Si$, wherein p power generation apparatuses among the power generation apparatus SG1, the power generation apparatus SG2,..., the power generation apparatus SGi,..., the power generation apparatus SGn fail or do not have a power generation condition, which are collectively referred to as a failed power generation apparatus SGkl, a failed power generation apparatus SGk2,..., a failed power generation apparatus SGkz,..., a failed power generation apparatus SGkp (kzE {1, 2, 3,..., n}); z = 1, 2, 3,..., p; i = 1, 2, 3,..., n; i ≠ kz; 1 ≤p ≤ n; measuring, by the central coordinated controller CCC, the instantaneous total power of the traction network comprising n-p power generation apparatuses through the voltage transformer PT and the current transformer CT, and distinguishing a power consumption state and a power generation state; determining, by the central coordinated controller CCC, the total active power generation capacity Ea of the power generation apparatuses that do not exit operation based on the instantaneous total power of the traction network comprising n-p power generation apparatuses and the total installed capacity Sa of the power generation apparatuses, wherein Ea ≤ Sa; and
controlling, by the central coordinated controller CCC, the active power generation capacity of the power generation apparatus SGi to be Eai, wherein Eai = Ea * Si/Sa; and
when a power generation apparatus fails or does not have a power generation condition, then: reacquiring, by the central coordinated controller CCC, the voltage UPai of the switching station STi corresponding to the power generation apparatus SGi that has not exited operation through the voltage transformer PTi; controlling the power generation apparatus SGi to generate a reactive compensation capacity qai based on the voltage UPai to compensate for the power factor of the traction network and the network voltage of the switching station at this time, wherein the absolute value of qai satisfies $|qai| \leq Qi$, and the power generation apparatus SGi is capable of controlling either the active power generation capacity or the reactive compensation capacity separately, or controlling both the active power generation capacity and the reactive compensation capacity simultaneously.

FIG. 1

FIG. 2

calculating, by a central coordinated controller CCC, a total installed capacity S of power generation apparatuses based on installed capacities S1, S2,..., Si,..., Sn of the power generation apparatus SG1, the power generation apparatus SG2,..., the power generation apparatus SGi,..., the power generation apparatus SGn

measuring, by a voltage transformer PT and a current transformer CT, the instantaneous total power of the traction network with n power generation apparatuses

determining the total active power generation capacity E of the n power generation apparatuses based on the instantaneous total power of the traction network and the total installed capacity S of the power generation apparatuses

controlling the active power generation capacity of the power generation apparatus SGi to be Ei

acquiring a voltage UPi of the switching station STi through a voltage transformer PTi; and controlling the power generating apparatus SGi to emit a reactive compensation capacity qi based on the voltage UPi

judging, by the central coordinated controller CCC, that the power generation apparatus has a failure or has no power generation condition, and causing the power generation apparatus to exit operation

calculating the total installed capacity Sa of the power generation apparatuses not exiting operation

measuring the instantaneous total power of the traction network with n-p power generation apparatuses through the voltage transformer PT and the current transformer CT

determining the total active power generation capacity Ea of the power generation apparatuses that do not exit operation based on the instantaneous total power of the traction network and the total installed capacity Sa of the power generation apparatuses

controlling the active power generation capacity of the power generation apparatus SGi to be Eai

acquiring the voltage UPai of the switching station STi through the voltage transformer PTi; controlling the power generation apparatus SGi to generate a reactive compensation capacity qai based on the voltage UPai

FIG. 3

## INTERNATIONAL SEARCH REPORT

| International application No. |
|---|
| **PCT/CN2022/072982** |

**A. CLASSIFICATION OF SUBJECT MATTER**

B60M 3/00(2006.01)i; B60M 3/06(2006.01)i; B60M 1/13(2006.01)i

According to International Patent Classification (IPC) or to both national classification and IPC

**B. FIELDS SEARCHED**

Minimum documentation searched (classification system followed by classification symbols)

B60M

Documentation searched other than minimum documentation to the extent that such documents are included in the fields searched

Electronic data base consulted during the international search (name of data base and, where practicable, search terms used)

CNABS; VEN; CNTXT; USTXT; WOTXT; EPTXT; CNKI: 西南交通大学, 李群湛, 黄小红, 牵引, 同相, 供电, 分布式, 新能源, 功率, 发电, 风, 光伏, 氢, 化学, 太阳能, 电压, 电流, 光纤, 测量, traction, network, distributed, same, phase, power, generation, wind, photovoltaic, hydrogen, solar, voltage, current, fiber, measure

**C. DOCUMENTS CONSIDERED TO BE RELEVANT**

| Category* | Citation of document, with indication, where appropriate, of the relevant passages | Relevant to claim No. |
|---|---|---|
| PX | CN 113492733 A (SOUTHWEST JIAOTONG UNIVERSITY) 12 October 2021 (2021-10-12) claims 1-10 | 1-10 |
| PX | CN 113492732 A (SOUTHWEST JIAOTONG UNIVERSITY) 12 October 2021 (2021-10-12) description, paragraphs [0025]-[0044], and figures 1-3 | 1-10 |
| PX | CN 113497461 A (SOUTHWEST JIAOTONG UNIVERSITY) 12 October 2021 (2021-10-12) description, paragraphs [0022]-[0041], and figures 1-3 | 1-10 |
| Y | CN 112848976 A (CHINA RAILWAY DESIGN CORP.) 28 May 2021 (2021-05-28) description, paragraphs [0019]-[0033], and figures 1-5 | 1-7 |
| Y | CN 112339619 A (SOUTHWEST JIAOTONG UNIVERSITY) 09 February 2021 (2021-02-09) description, paragraphs [0019]-[0035], and figures 1-4 | 1-7 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 May 2022** | **26 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/072982** |

**C.   DOCUMENTS CONSIDERED TO BE RELEVANT**

| Category* | Citation of document, with indication, where appropriate, of the relevant passages | Relevant to claim No. |
| --- | --- | --- |
| Y | 王怡 (WANG, Yi). "贯通式牵引变电所单相虚拟同步机控制策略研究 (The Single-phase Virtual Synchronous Machine Control Strategy of the Advanced Co-phase Traction Substation)" 中国优秀硕士学位论文全文数据库工程科技II辑 (Engineering Science and Technology II, China Master's Theses full-text database), No. 3, 15 March 2021 (2021-03-15), ISSN: 1674-0246, pages C033-310 | 1-7 |
| A | CN 112350377 A (SOUTHWEST JIAOTONG UNIVERSITY) 09 February 2021 (2021-02-09) entire document | 1-10 |
| A | CN 211335659 U (QINGHAI NEGO NEW ENERGY CO., LTD.) 25 August 2020 (2020-08-25) entire document | 1-10 |
| A | JP 2020203647 A (NISHINIPPON RYOKAKU TETSUDO KK) 24 December 2020 (2020-12-24) entire document | 1-10 |

Form PCT/ISA/210 (second sheet) (January 2015)

**INTERNATIONAL SEARCH REPORT**
Information on patent family members

International application No.

**PCT/CN2022/072982**

| Patent document cited in search report | | | Publication date (day/month/year) | Patent family member(s) | | | Publication date (day/month/year) |
|---|---|---|---|---|---|---|---|
| CN | 113492733 | A | 12 October 2021 | CN | 113492733 | B | 26 November 2021 |
| CN | 113492732 | A | 12 October 2021 | CN | 113492732 | B | 30 November 2021 |
| CN | 113497461 | A | 12 October 2021 | CN | 113497461 | B | 23 November 2021 |
| CN | 112848976 | A | 28 May 2021 | CN | 215398285 | U | 04 January 2022 |
| CN | 112339619 | A | 09 February 2021 | CN | 112339619 | B | 03 August 2021 |
| CN | 112350377 | A | 09 February 2021 | CN | 112350377 | B | 13 April 2021 |
| CN | 211335659 | U | 25 August 2020 | CN | 111016742 | A | 17 April 2020 |
| JP | 2020203647 | A | 24 December 2020 | | None | | |

Form PCT/ISA/210 (patent family annex) (January 2015)

**EP 4 397 534 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111046377
- CN 202110028103